# EUROPEAN PATENT SPECIFICATION

(11) **EP 2 300 679 B1**
(45) Date of publication and mention of the grant of the patent: **22.10.2014**
(21) Application number: 09757300.0
(22) Date of filing: 04.06.2009
(51) Int. Cl.: E06B 9/386, E06B 9/24, E06B 9/326

(54) **BLIND DEVICE FOR LIGHT PROTECTION AND DISPLAYING OF INFORMATION**
JALOUSIEVORRICHTUNG ALS LICHTSCHUTZ UND ZUM ANZEIGEN VON INFORMATIONEN
STORE POUR PROTECTION CONTRE LA LUMIÈRE ET AFFICHAGE D'INFORMATIONS

(30) Priority: 04.06.2008 DE 102008002219
(43) Date of publication of application: 30.03.2011
(73) Proprietor: Mediabiose GmbH, 80339 München (DE)
(72) Inventor: SALLER, Tobias, 93109 Wiesent (DE); Yordanova,Mariana, 80339 München (DE)
(74) Representative: Vossius & Partner
(86) International application number: PCT/EP2009/004018
(87) International publication number: WO 2009/146917

(56) References cited:
- EP-A- 1 594 109
- DE-A1- 10 344 213
- DE-A1-102004 061 988
- US-A1- 2007 159 413
- US-A1- 2007 175 599

## Description

### Technical Field

The invention relates to a blind device, particularly a Venetian blind device, comprising at least one slat for light protection, an arrangement comprising at least one of the blind devices and a method for light protection and for the display of information.

### Technical Background

Regarding the illumination of buildings, devices are known which mostly have one or more immobile carrier systems which are connected to one or more light sources and serve for illuminating the building from the outside. Simultaneously, also display devices are known which serve to display information and are designed as a board or table or as several boards or tables arranged next to each other. Display devices that have different transparencies are also known from EP-A-1-293-955. All these systems have fixed devices which do not have the purpose of fulfilling a sun light protection function and do not allow a corresponding adjustability to different angle of sun radiation and intensity.

On the other hand, sun protection devices in the form of, for example, borderless slats are known which mostly have at least two pairs of guide cords for holding and turning the slats and only have the function to protect against sun or environmental light in order to prevent blinding of unwanted heating up of the building. Such arrangements are known from the common kinds of blinds, e.g. as described in DE-A-10-2004-061988.

DE-A-10-2005-032675 describes a sun protection apparatus for buildings. The apparatus comprises adjustable light protection slats having a light source for direct and/or indirect lamination of artificial light.

DE-A-103-44213 describes a light protection and illumination device having a semiconductor layer on at least one side thereof. The semiconductor converts light energy into electrical energy which can be stored in an energy storage device.

DE-C-101-31598 describes a sun light protection device having a plurality of OLEDs for displaying of information. The OLEDs are arranged on the support unit and controlled by a control unit.

DE-10-2005-6030166 describes an illumination device having light sources integrated in the fabric hangings in order to provide a blind-free and variable illumination.

US-A-2007-0159413 describes a display system having a plurality of display units, wherein each of the display units is moveable between at least a first position and a second position, wherein the display unit at the first position is vertical to the display units at the second position. The display unit is provided with light emitting elements for displaying at the first or the second position of the display unit.

In the storage position of the display system, a display function is present even when the display units are driven up and closely stacked and ruffled next to each other.

EP-A-1594109 describes a display device comprising a plurality of support units having an elongated recess for receiving LEDs and circuit boards, wherein at least some of the LEDs are protruded from recess of the support units. The support units rotate between an operational position and a non-operational position.

Previous embodiments of light sources in shade arrangements cannot, however, at the same time be used and adjusted like a blind. In particular, in modem architecture the kind of artificial laminar illumination and display of information at or on facades is desired, at the same time the light protection, particularly the sun light protection through different weather conditions and daylight intensities is indispensable according to the current demands on buildings. As sun light intensity and angle of radiation changes during a day and also during a year the move and rotation of the slats enables the amount of sun light coming through it to be flexibly adjusted. Instead, such recordable planes in the art are attached as separate tables and are not integrated in the buildings in a. way allowing a flowless proceeding of the described function.

Furthermore, the conventional light protection and information display device are provided in a particular proprietary construction. In order to add the display function to a blind device, the whole blind device need to be replaced, or both need to be installed separately, which is inflexible, may cause high cost, is inconvenient for the installation.

### Object of the invention

The object of the present invention is to provide an improved or alternative modular blind device that can be integrated in a building and fulfil not only the improved adjustable light protection but also an improved information displaying information function.

The display function may be also added to a conventional sun light protection blind device by arranging light sources onto the existing blind device. The modularity of the present invention facilitates a flexible selection of blind device beforehand as well as the possibility of adding the displaying function when the blind device already exists.

As the slats may be rotated around its longitudinal axis and moved up and down, the linear position and the angle position of the slats may be variable in accordance with the demand for light protection and/or displaying of information.

### Technical solution

The object can be obtained by the subject-matter defined in claims or described below.

According to the present invention the problem is solved by a blind device according to claim 1.

According to a preferred embodiment, a plurality of slats each individually or in groups are adapted to be rotated around their longitudinal axes respectively, and/or the plurality of slats are adapted to be moved linearly such as up and down. Therefore, the blind device may provide at the same time an adjustable light protection especially day light protection and controllable light and display area. The blind device is adjustable in order to receive a variable daylight and/or ensure adjustable view and sight partitions and/or display area that is at the same time flexible, a light and display device is built into an adjustable light protection element.

According to a preferred embodiment, the blind device may have one or more light sources that are integrated in a slat, called also a blind/light protection element so that they allow irradiation of light and/or display or light to provide information for a spectator when they are switched on. The light sources are integrated in such a way and connected with each other via appropriate wires that they are directly coupled to the blind/light protection element and allow the faultless drive up and drive down, ruffling and/or adjustment of the blind/light protection elements.

According to a preferred embodiment, the linear and the rotatable movement of said slats may be driven by an electrical driving means which may be integrated in the blind device or formed as an external device.

According to a preferred embodiment, said wire may comprise at least a first cable for supplying electrical energy to said light source and/or to the electrical driving means and/or at least a first cable for supplying data and/or signals to said light sources.

According to a preferred embodiment, the plurality of slats are adapted to be elevated up or down according to the desired amount of sunprotection and/or light and display configuration.

According to a preferred embodiment, the linear and the rotatable movements of said slats are driven by an electrical driving means.

According to a preferred embodiment, said wire comprises at least a first cable for supplying electrical energy or signals at least to said light source and/or to the electrical driving means. According to a preferred embodiment, a slat control unit is configured for transmitting a control signal, wherein said slat control unit is adapted to determine the angle und/or the position of the slats.

According to a preferred embodiment, said wire is integrated or bundled with the lifting strip and/or with the guide cord.

According to a preferred embodiment, said lifting strip comprises at least one housing for receiving wires.

According to a preferred embodiment, said wire is connected to corresponding light sources via at least one removable connection.

According to a preferred embodiment, said wire extends outwardly via a small edge on the side of the slats and/or on the longitudinal side of the slats. The electrical connections may be made by contacting the wire from being received in the wire with an construction frame surrounding the slats. Both ends of the slat are configured not to hinder the receiving of the wire in the construction frame.

According to a preferred embodiment, said wire extends from an end of the slats into a frame surrounding the blind device.

According to a preferred embodiment, the wire is designed and arranged to facilitate the linear and the rotational movement of the slats and/or to follow the stacking and ruffling of the guide cord.

According to a preferred embodiment, the light sources comprise a plurality of LEDs and/or OLEDs.

According to the invention, said light sources for fulfilment of an illumination function and/or display function are arranged on a plurality of light source carriers attached to at least one of the plurality of slats.

According to the invention, each light source carrier is designed as a component being adapted to be connected to a corresponding slat. The light source carriers preferably comprise a circuit board or are the circuit board itself.

According to a preferred embodiment, each light source carrier comprises a first circuit board and at least one casing for protection of the light source and or circuit board.

According to a preferred embodiment, said light source carriers further comprise a second circuit board being positioned adjacent to or attached to the first circuit board, wherein the second circuit board is designed primarily to transform the electrical current and/or to transmit the signals via the wire(s) into the light sources.

According to a preferred embodiment, said casing is made of acrylic and/or a metallic material and/or has a round or oval or polygonal shape.

According to a preferred embodiment, said slat is designed as light source carrier.

According to a preferred embodiment, the said slats or at least the light sources and/or the light source carrier have a coating, a lamination, a pattern, and/or a grouting to improve its optical and/or technical characteristics.

According to a preferred embodiment, said blind device consists of a combination of materials having different technical characteristics in order to influence the light in the area of the light source in the desired way, in particular to display, deflect and/or absorb the light.

According to a preferred embodiment, at least one of the plurality of said slats is formed for receiving and/or arranging said source.

According to a preferred embodiment, at least one of the plurality of said slats has a concave, convex and/or planar surface which is preferably light reflecting and/or light absorbing and/or light directing.

According to a preferred embodiment, said blind device is arranged to be free-standing.

According to a preferred embodiment, said blind device comprises a photovoltaic element. The photovoltaic layer can be build as thin layer, laminat or coating preferably arranged on the top of a slat.

According to a further aspect, the present invention provides an assembly comprising at least one blind device according to one of the preceding claims, wherein said blind device is integrated in sun protection arrangements or venetian blind arrangements.

According to a preferred embodiment, said assembly comprises at least one blind device according to one of the preceding claims, wherein said assembly has a plurality of blind devices arranged on top of each other and/or next to each other.

According to a preferred embodiment, the assembly has a building front close to which at least one blind device is arranged.

According to a preferred embodiment, said blind device is built in front of or behind one or in front of, behind or between several transparent or opaque panes, such as glass panes.

According to a preferred embodiment, said blind devices can be switched on independently or in groups from each other and/or separately.

According to a preferred embodiment, said light sources of said at least one blind device form a display panel that can be used for illumination or information carrier for animations and/or images, videos etc.

According to a preferred embodiment, said light sources of said plurality of slats are adapted for displaying a text banner when said slats linearly moved close to each other; and wherein for said light sources of said plurality of slats are adapted for displaying images and/or animation and/or videos when said plurality of slats moved linearly apart to each other.

According to a further aspect, the present invention provides for controllable light protection and/or displaying of information by using at least one blind device according to claim 21.

According to a preferred embodiment, the method further comprises the steps of: supplying electrical current to an electrical driving means for driving said plurality of slats; transmitting a control signal from a slat control unit, wherein said slat control unit is adapted to determine the angle und/or the position of the slat, preferably in accordance with the radiation angle of the sunlight.

According to a preferred embodiment, wherein the method further comprises the steps of: changing the distance between each of said plurality of slats by linearly moving said plurality of slats close to each other when displaying information requiring information with higher resolution, such as a text passage; or changing the distance between each of said plurality slats by linearly moving said plurality of slats apart from each other when displaying a larger image requiring smaller resolution such as images or animation of images.

According to a preferred embodiment, said plurality of the light sources may be divided into at least two groups having different illumination directions, wherein the method further comprises the steps of: rotating said plurality of slats to change the angle of viewing point for a watcher, in order to provide a different information as the initial displayed information or in order to provide a different level of sunlight protection. In particular, the plurality of slats may be divided into a first or a second group. Preferably, each group has substantially the same number of slats. The slats within the first group may be alternately arranged in respect to slats of the second group. The slats within the first group may have different rotational angle as of the second group. According to this embodiment, the display panel formed by the first and the second group of slats may simultaneously display two different images or animation or the like. Depending on the viewing angle, only one of the displayed images or animation may be visible for the viewer, as the illuminate angle of the slats is in accordance with the rotational angle. According to a further embodiment, the plurality of the slats may divided into multiple groups. Consequently, the display panel may provide multiple visible information simultaneously for different purposes and/or viewers in different locations. As the slats may be continuously rotated and/or linearly moved, the viewing angle can be changed steplessly within a range of 180°.This enables an enlarged area where the viewer is located.

According to a preferred embodiment, wherein the method further comprises the steps of: arranging a plurality of said blind devices on top of each other and/or next to each other, in order to enlarge said display panel for displaying information; wherein each of said blind devices is capable to be controlled individually or in groups in respect of their movement and/or signal of displayed information.

The blind device preferably has means for rotatably attaching the slat to an object, in particular, for a rotation of the slat around a longitudinal axis of the slat. The blind/sun protection element (i.e. the slat) has a shape that has a stronger pronounced linearity in the longitudinal axis. The narrow end of the blind/sun protection element can be designed differently as regards geometry: oval, concavely, convexly, straightly or wave-like. Further, the blind device comprises means for linearly moveable arrangement of the slats to an object, i.e. the slats are capable to be elevated up and down or from the left to the right in respect to the object. The light sources according to the present invention are arranged so that the movement of the slats are not hindered.

A preferred advantage of the blind device according to the present invention is that the drive up of the blinds occurs simultaneously with the one or more integrated light sources. The operation of the blind device is similar to the operation of a usual sun protection blind.

A further preferred advantage is that when piling up the light sources integrated in the blind/sun protection elements can be arranged close on top of each other and therefore allow a free sight and full transparency for the viewer. The invention allows a flexible use on the building front and is no obstacle as previous display and light arrangements have been.

### Short description of the Figures

Particular embodiments of the present invention are explained in the following with the attached Figures.
Fig. 1 shows a conventional blind arrangement corresponding to the prior art and being in light protection position wherein the slats are arranged to each other at larger distance. The Figure shows a front view and a side view;
Fig. 2 shows a conventional blind arrangement corresponding to the prior art and being in raffled position wherein the slats are arranged closely to each other to allow more light coming from outside and a better view from the inside. The Figure shows a front view and a side view;
Fig. 3 shows a schematic view of the slat of a blind device according to the present invention;
Fig. 4 shows a schematic side view of the functional principle of a blind device according to the present invention, wherein the light source is arranged on an independent light source carrier and wherein the light source carrier has a housing;
Fig. 4.1 shows a schematic side view of the functional principle of a blind device according to the present invention, wherein the light protection element serves as light source carrier for the light sources and no additional separate light source carrier is needed;
Fig. 5 shows a first embodiment of the cable route of a blind device according to the present invention;
Fig. 6 shows a second embodiment of the cable route of a blind device according to the present invention;
Fig. 7 shows exemplary embodiments of the blind device according to the present invention;
Fig. 8 shows sketchy perspective views of two embodiments of Fig. 6;
Fig. 9 shows a perspective view of one of the embodiments of the blind device according to the present invention indicated in Fig. 6, when a plurality of blind devices are arranged on top of each other and form a blind arrangement according to the present invention. The light sources that are arranged like a matrix enable a light and/or medial playing-on the whole plane;
Fig. 10 shows a perspective view of one of the embodiments of the blind device according to the present invention indicated in Fig. 6 when the blind devices are driven up and ruffled and the slats are stacked on top of each other so that the distance is minimal;
Fig. 11 shows a perspective view of the functional principle of the intelligent control mechanism according to the present invention, wherein the blind device is arranged such that the shadow of the stationary components in which some of the photovoltaic elements are arranged may be kept as minimal as possible;
Fig. 12 shows a preferred embodiment according to the present invention, in which the light source carrier, in particular the circuit boards are configured modularly;
Figs. 12a - 12e show exemplary embodiments for variations of the wire arrangement; and

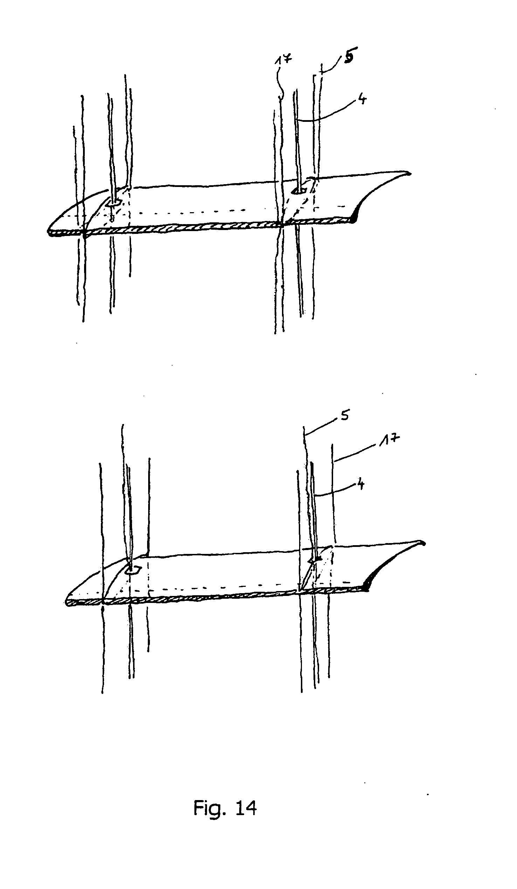

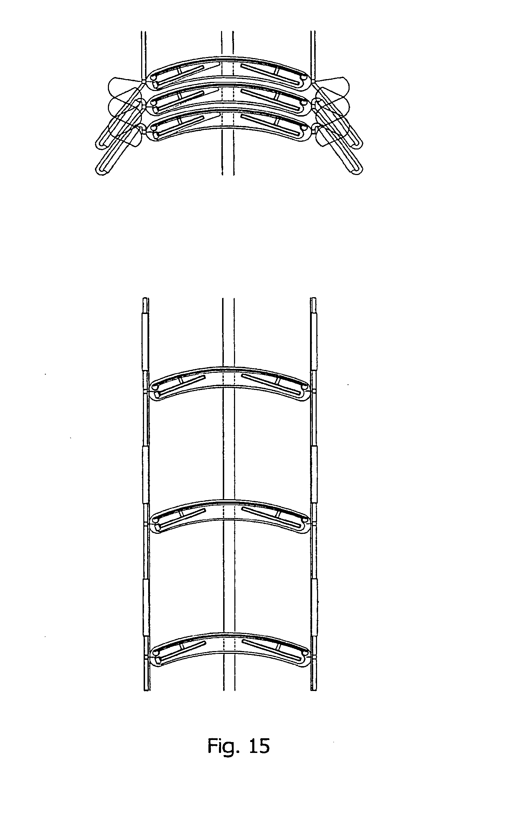

Figs. 14 and 15 show an embodiment for a wire arrangement.

### Description of preferred embodiments

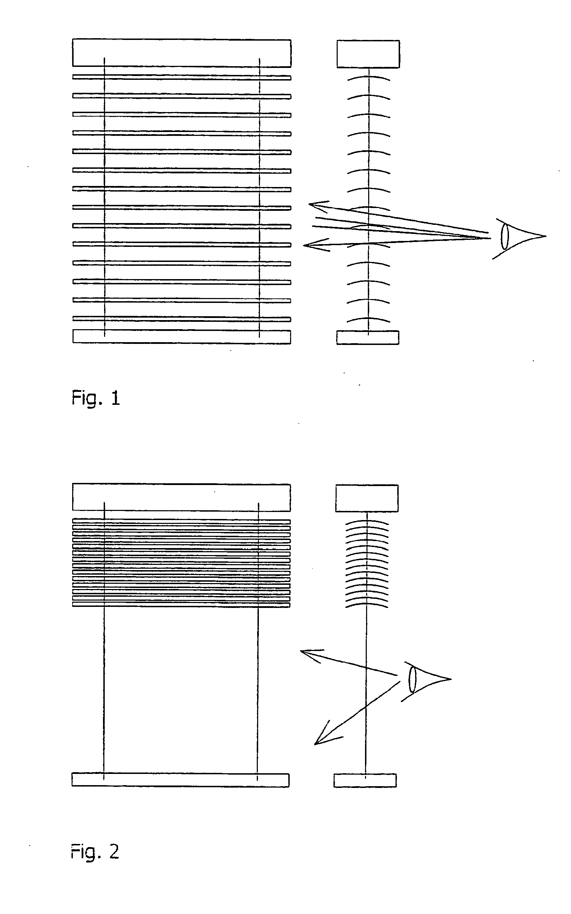

Fig. 1 and Fig. 2 show a conventional sun protection arrangement consisting of several slats only having the function of sun protection.

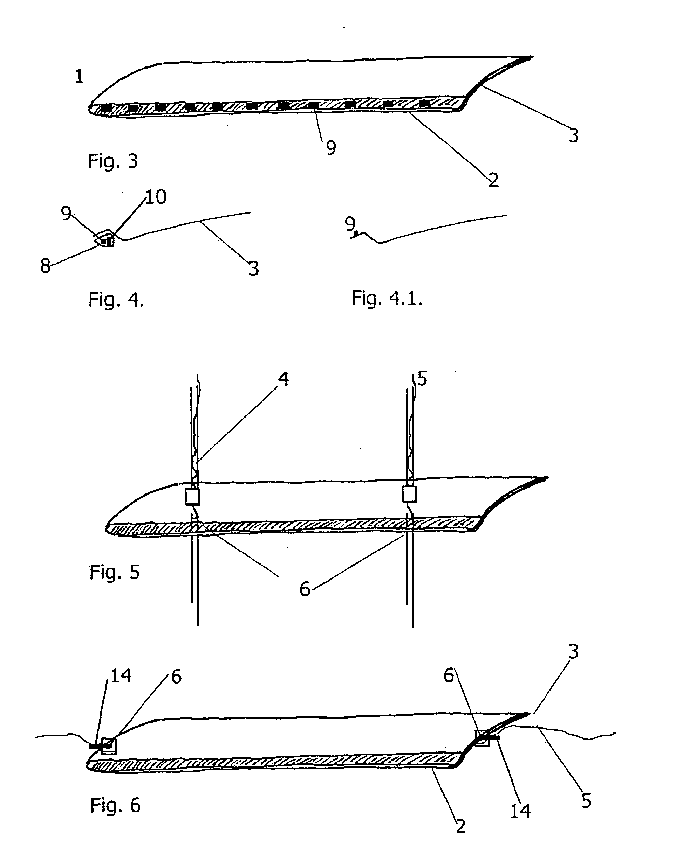

Fig. 3 shows a blind device 1 comprised of a light protection slat 3 and a light and display arrangement 2. Each light and display arrangement 2 comprises one or more light sources 9 coupled optically to the light protection element 3.

Fig. 4 shows an embodiment in which the light sources 9 are arranged at a separately designed light source carrier 10 surrounded by a housing 8, wherein the housing 8 may be optional.

Fig. 4.1 shows an embodiment in which the light or sunlight protection element 3 may be the light source carrier 10. In this case no light source carrier 10 has to be arranged if the light protection element 3 per se has the material properties to serve as such. Furthermore, the light protection element 3 can be designed such that its natural properties are upgraded by coating, applying patterns, making holes or deformation so that no separate light source carriers 10 are needed when inserting the light sources 9.

Figs. 3-6 show perspective views of exemplary embodiments in which the light protection element 3 preferably has a more distinctive longitudinal axis. The embodiment of these elements is realized so that the light protection elements 3 can be driven up or down and/or adjusted together with light sources 9 and light source carriers 10. Special configurations of the light protection element 3 are also possible wherein the light protection element is separated into several areas by buckling and/or bending.

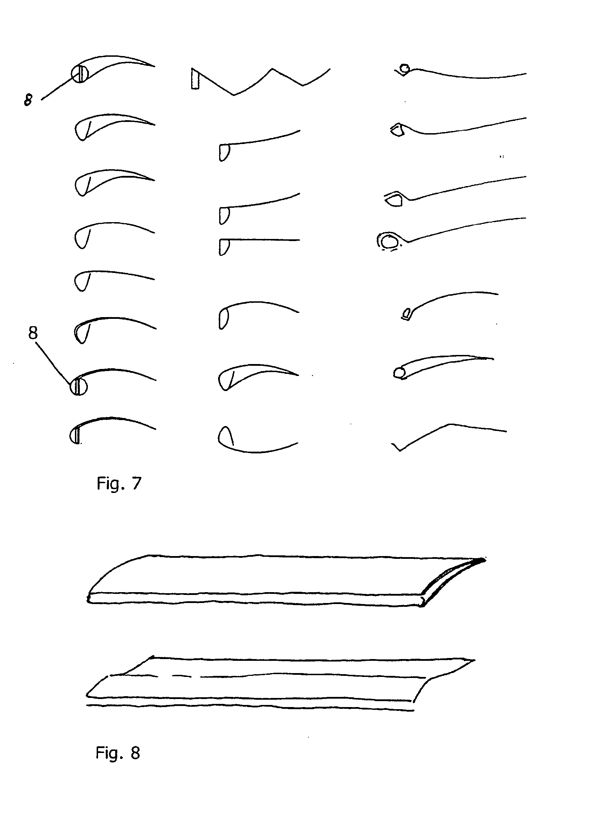

Fig. 7 shows possible embodiments of the blind device 1 according to the present invention. It is to be noted that each of these embodiments has the two basic functions, namely adjustable light protection and controllable light and/or display arrangement. The deformation of the light protection element 3 can serve for direct reception of the light sources 9 as already explained. Furthermore, it is possible that by deforming the sun protection element 3, the properties of the integrated light source 9 regarding light reflection, light absorption or light control can be extended.

Fig. 8 shows a perspective view of two of the possible embodiments. It is to be pointed out that the light protection element 3 of the blind device 1 can be realized by several geometrical shapes.

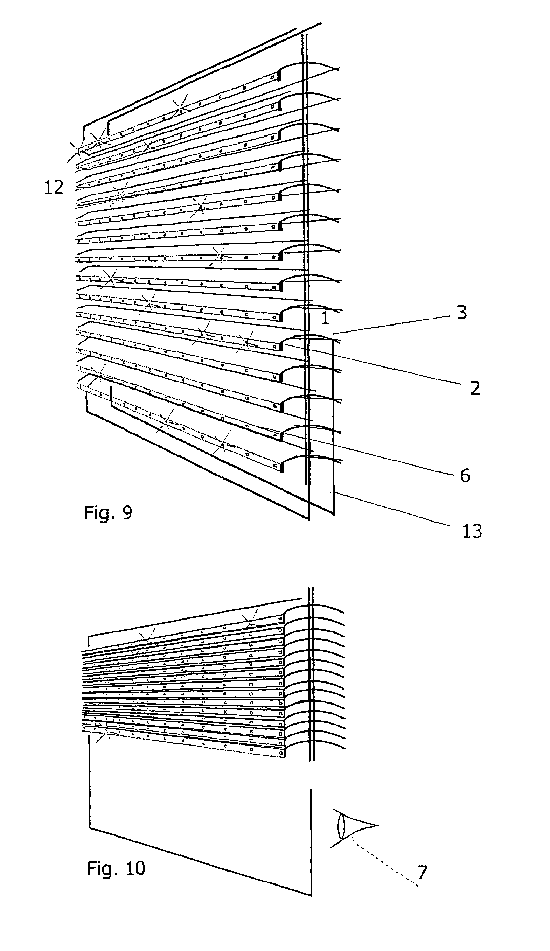

Fig. 9 shows in a perspective view how a plurality of blind devices can work together by using them for light protection but simultaneously allow a light and display function. Said position of the blind devices according to the present invention can also be described by the term "medial playing". The term "medial playing" in this context means each kind of graphical, coloured or black and white, moved or still format created by the light sources 9 that are integrated in the blind device. This is achieved due to the fact that each single light source 9 or a plurality of light sources 9 can be controlled together and thus form a medial plane 12. A medial plane 12 consists of one or more blind devices 1 according to the present invention.

Fig. 10 shows in a perspective view a further position of a plurality of blind devices 1 according to the present invention that are in this case driven up and thus closely stacked and ruffled next to each other. The Figure aims at showing which manifold fields of application are given by the flexible controlling of the blind devices. In this case only partial areas would be recorded and/or illuminated wherein the remaining part is free for unhindered sight. This embodiment is particularly appropriate for the use on building fronts as thus a controllable transparency of the building front is secured and simultaneously an additional useful light and display function is present.

The blind devices can be stacked and ruffled with different distances during the drive up. This can result in several interim positions.

The controllable blind devices can also be portioned so that in a medial plane 12 a certain number of blind devices according to the present invention drives up and a certain number down. The reason for that is the simplified cable route in which the number of the cables leading out of the blind devices is portioned.

The blind device according to the present invention further involves the preferred advantage that it can serve as an adjustable light protection and/or as a light and display area in each of the interim positions whereas already known arrangements exhibit either only sun protection function or a light and display function. The already known arrangements are not flexible adjustable in terms of improved utilisation of day light either and can thus not secure sufficient transparency when it is needed.

In Figs. 5 and 6 it is shown how the cable route of the single blind devices can work in the embodiments. Due to the fact that each blind device can be simultaneously an adjustable sun protection and/or a light and display area, the integration of the cables supplying electric circuit board for the light sources and/or for their controlling is particularly important.

In the preferred embodiment illustrated in Fig. 6, the cabling is effected by leading the light source connection wire 5, preferably cable, out of the narrow side of the blind device 1. The light source connection wire 5 can be led out one-sided or two-sided. According to this embodiment, the light source connection wire 5 can be integrated in a guide pillar 14 which works simultaneously when driving the blind up and down.

A further preferred aspect according to the present invention is considered in which the light source connection wire(s) 5 is/are led into a corresponding fitting construction 13 so that they, or the major part of them, remain invisible to the viewer and protected by any environmental influences, such as aging by radiation or humidity.

It is a further preferred aspect according to the present invention that the connection between light source carrier 10 and light source connection wire 5 can be designed as a releasable connection 6. This would involve the advantage that maintenance of the wire can be facilitated, in case the blind device 1 or the light carrier 10 needs to be replaced. This also provides the preferred advantage of a modular assembly which makes it possible to assemble or replace individual parts or grouped parts on a modular basis.

In Fig. 5 the conduction of the light source connection wires 5 of the separate blind devices is effected by integrating the light source connection wires 5 in lifting strips 4 that can be advantageously used to lift and/or adjust at least one of the preferred blind devices. According to this embodiment, the lifting strips 4 are designed so that they can receive cables and advantageously have a housing facilitating the integration of the cables.

According to a further preferred embodiment, coupling of the light source connection wire 5 between two or more of the blind devices is also possible. This means that two or more blind devices can be connected after each other before one wire is led away from the last or from the first blind device.

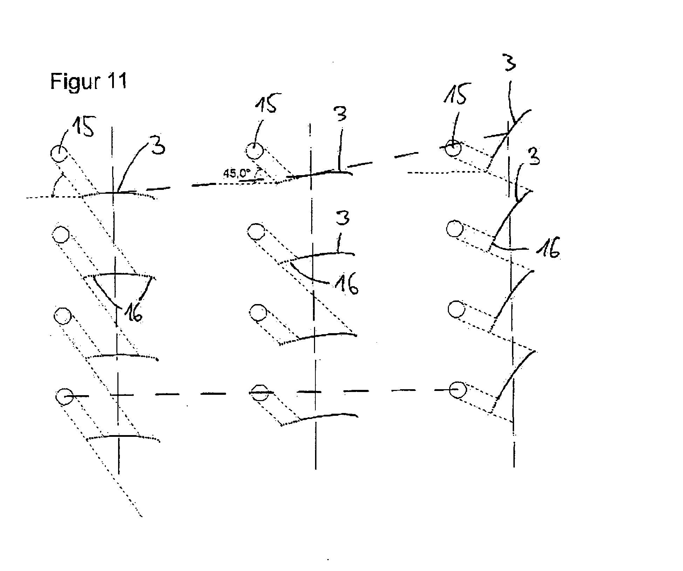

Fig. 11 shows the different angle settings in which the slat 3 are configured in accordance with a photovoltaic surface. Substantially, the whole upper surface of the slat 3 may be provided with photovoltaic elements or flexible photovoltaic layer. A plurality of slats may be arranged vertically to each other. The angle settings may be adjusted by an intelligent slat control unit, in order to minimise the shadow area 16 created by the pre-arranged elements 15 which support the light source. The shadow areas 16 on the slat 3 are here indicated by the dotted lines. It is to be noted that depending on the light radiation angle, the left side achieves a distorted result in terms of the utilisation of photovoltaic surface 3 compared to the middle and the right side. This kind of "intelligent" slat control unit collects light radiation angle and calculates the optimal angle setting for the plurality of slats or for a particular slat individually. The optimal angle settings, i.e. in which the maximal rate of electrical current yield may be achieved with the photovoltaic elements, may comprise the shadow cast of the pre-arranged elements and/or the striking angle of the sunlight radiation on the photovoltaic elements, which may amount up to or close to 90°, if possible. The controlling may be formed as an adjustment or a post-adjustment device for the photovoltaic elements, depending on the sunlight radiation.

Moreover, the slats may be moved in terms of a rotation thereof or vertical shifting of the position thereof, in order to obtain maximal efficiency of the arrangement of the blind device. This is indicated by the dotted lines which run from left to right. In this illustrated embodiment, the vertical movement of the slats are accompanied by a relative movement und a change of the relative distance of the element 15 and/or of the slats. An optimal efficiency of the sunlight radiation may be achieved by the combination of the change of the relative distance and of the angle of the slats 3.

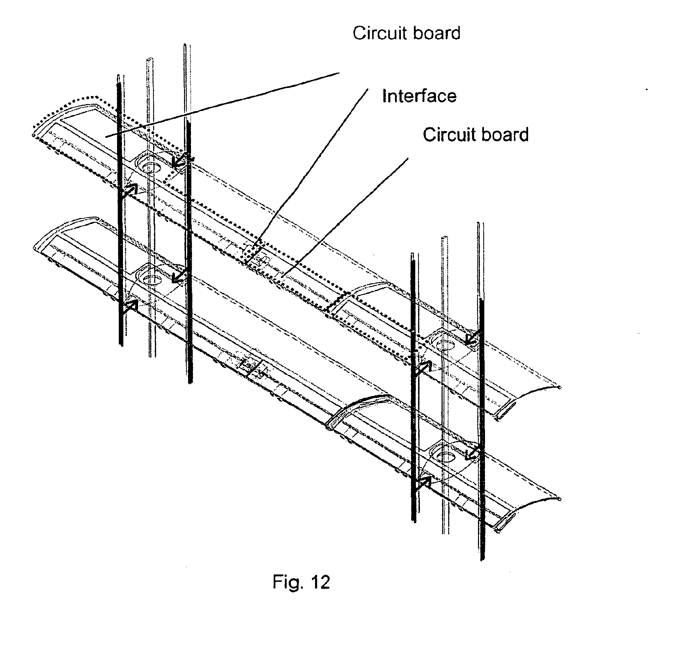

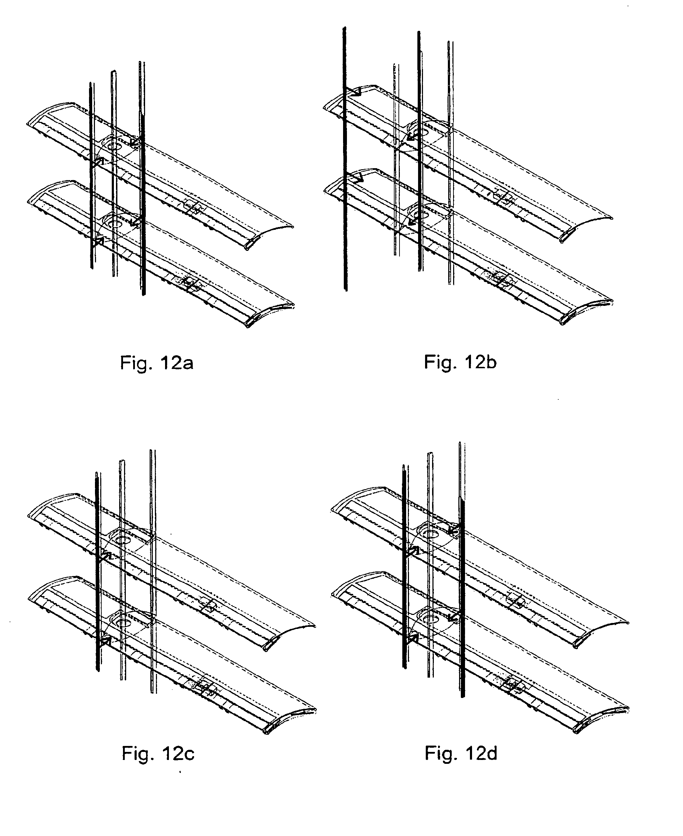

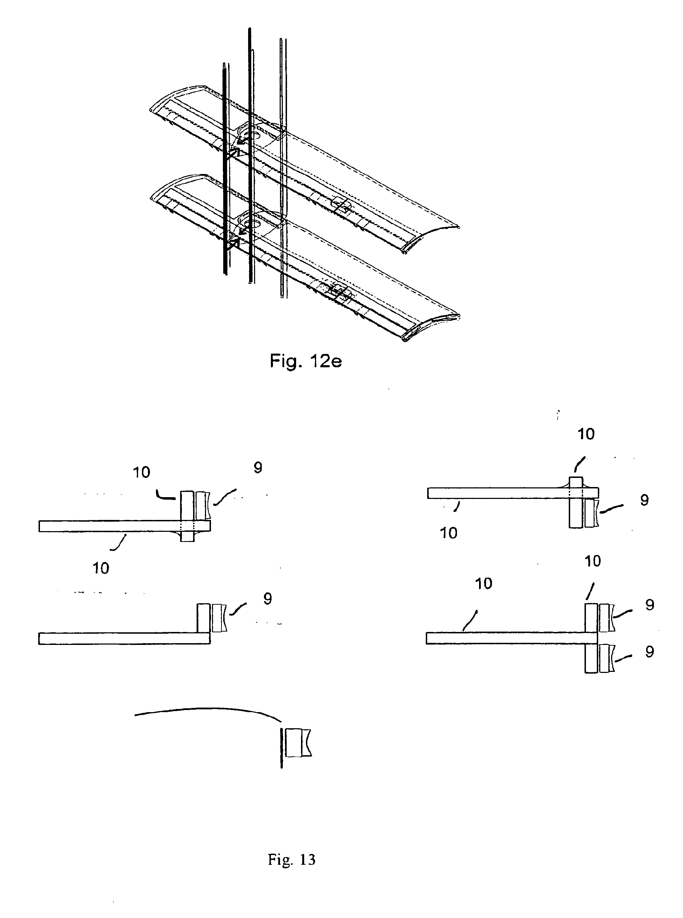

A preferred embodiment of the present invention is schematically shown in Fig. 12. The Figure shows a cut axonometry of two horizontally arranged blind devices according to the present invention. A blind device is mostly designed symmetrically. In order to have a better overview the Figure shows only part of the blind device which is otherwise designed symmetrically.

A plurality of the blind devices according to the present invention may be moved by the lifting cord by an electric motor or crank drive or a manual drive. Thus, they form sunlight protection hangings additionally having one or more light sources that are controllable separately or in groups.

The supply with energy and data and/or control signals of the separate blinds is preferably carried out via one or more wire(s), wherein said wires are preferably arranged directly near the lifting cord and/or near the guide cord. The so-called guide cord in connection with lifting cord in the field of light protection arrangements known in the prior art serve for gathering and adjusting the separate blinds. In a preferred embodiment of the invention, the cable routes of energy/electricity and data/signals are separated from each other and designed as separate wires that are arranged separately on the board. Combining the cables and data lines to one wire is also possible. Due to the fact that the blind device according to the present invention is at the same time sun protection arrangement and/or venetian blind arrangement, the wires for electric current and/or data supply are designed so that the stacking of the blind devices is guaranteed flawlessly. In a preferred embodiment the wires are made of highly flexible materials guaranteeing manifold buckling and bending and ruffling of the cables.

The wire for providing energy and/or data supply are flexibly designed so that they copy the gathering of the guide cord similarly and via similar deformation. The wires are preferably designed so that they allow a gatherable deformation in their geometry. The wires can be separated preferably according to data/signals and/or electric current and be arranged at several positions that are sensible for the assembly of the light protection arrangement. Particularly, preferred positions for arranging them are the planes on the conductor board that are positioned directly close to the guide cord, preferably parallel to their longitudinal axis. In another embodiment the wires are designed so that they serve as guide cord and replace them in their function. In a further embodiment the wires or part of the wires run(s) through or next to the lifting cord. In a further embodiment the wires or part of them are integrated in the guiding rail on the side. In a possible embodiment the wire can be also formed as sliding contacts, on the metal frame surrounding the slats or running through the slats similar to the lifting strip.

Electric current and digitally transmittable signals and/or data run in the direction to at least one of the conductor boards being directly attached to the blind device. Said signals and/or data are preferably transmitted via cables or wirelessly via e.g. blue tooth or another form of wireless data transmission. The signals preferably serve for controlling the separate light sources, preferably by a driving means. The light source may be controlled individually or in groups. The control can be effected via bus system, in series or via wireless data transmission. The energy supply of the LEDs is effected via the power supply line.

If the blind device has at the same time light sources and photovoltaic layers, like e.g. thin film photovoltaic, an electric current supply via energy obtained by the photovoltaic layer is possible. In this case the cable routes can supply the obtained energy from the photovoltaic layer back to the network. It is also possible to store the energy gained by the photovoltaic layer and supply it directly to at least one light source.

Figs. 12a to 12e show, via a cut axonometry of two horizontally arranged blind devices according to the present invention, possible positions where the cables can be arranged regarding the blind device according to the present invention. A combination of the alternatives is also possible.

In a preferred embodiment, the interface between circuit board and wire connection is designed so that it has one or more soldered joints and/or plugs and/or crimp contacts. This interface serves for creating a permanent or releasable connection between circuit board and wire so that the transmission of signals and/or data and/or electric current is possible.

In a preferred embodiment the wire guiding can be led from one blind device to the next. In order to guarantee flexible processing and installation at least one releasable or fixed point with at least one releasable or non-releasable connection can be attached inside the wire portion between two blind devices. Said connection can be formed via plug and/or crimp contact and/or soldering joint.

In a preferred embodiment the connection, namely the soldering joint, crimp contacts and/or plug by a protection hose, shrink hose, adhesive shrink hose and/or a covering film and/or a grouting coating can be protected against impacts from outside. The coating can further be realized by die-casting or a kind of spray coat method.

In a further embodiment the permanent guiding of the wire without releasable connection is also possible. The wire can be made of flat cables, cables with roundish cross-section, sliding contacts or an enlargement of the board itself. The enlargement is preferably a flexible board, which is preferably laminated. The wire, however, is designed in its cross-section so that they are flexible enough and have a cross-section as minimal as possible so that a flawless gathering of the cables is possible when driving the hangings up and down. It is important to guide the cables because the blind device in its function as part of sun protection hangings which can be driven up and down is not restricted.

A blind device contains at least one or more circuit boards at which at least one light source is attached. In a preferred embodiment at least one driver is arranged on the same circuit board, wherein said driver serves for controlling the at least one light source.

Fig. 12 shows a preferred embodiment and thus the possibility to realize the circuit board modularly for the purpose of a more flexible assembly and embodiment of the whole arrangement. Modules, i.e. circuit board modules can be combined with each other in different ways so that a blind device can be flexible in its length and width.

In a blind device according to the present invention, preferably at least one of the light source carriers comprising at least one circuit board is designed so that it can transform the voltage level of the wires to the voltage level on the circuit board. The same or a further circuit board is designed so that it has a particular interface for connecting data and/or energy wires. At least one circuit board can have control functions regarding controlling of the signals to the light sources.

If a plurality of circuit boards is realized in a device according to the present invention, connections between the circuit boards are provided, these connections being designed as permanent or resolvable connections. In a particularly preferred embodiment the connection between at least two circuit boards can be designed so that it has for example soldering joints, crimp connections and/or plugs preferably being protected against impacts from outside by a protection hose, shrink hose, adhesive shrink hose and/or a covering film and/or a grouting coating. The coating can further be realized by die-casting or a kind of spray coat method.

A blind device according to the present invention contains a plurality of light sources and a plurality of light source carriers preferably comprising a circuit board to which it is attached. The circuit board is directly attached to the blind device so that it moves when driven up and down and/or stacking and/or gathering the blind devices.

The light source is preferably formed by one or more light diodes preferably manufactured on the basis of a LED or OLED or another LED based technology. Preferably these are in an SMD or THT housing and are preferably designed as SideLed, MultiLED or TopLED.

Fig. 13 shows the relation from circuit board to light source in a schematic view. The Figure shows possible embodiments between circuit board and light source. Preferably the light source can be attached to a pass-through board or a board attached by a similar procedure or via a flexible board. It is also possible that the whole circuit board itself is made by a flexible material, a so called flex circuit board. In another preferred embodiment the light source can have at least one contact point and be attached on one side, on the front side or on both sides of the circuit board.

In a particularly preferred embodiment the circuit boards and the corresponding control and electronic units are designed so that they have a sheathing layer preferably a layer being weatherproof. The sheathing layer can preferably be designed in the form of a grouting, a paint or another form of lacquering and/or coating so that after applying this coating the components are water-proof or at least cannot be destroyed by water. Said mass can be applied on the basis of spray coat method, grouting, lacquering, brushing or another kind of permanent lamination.

Preferably, at least one coating of a weatherproof mass is applied on the circuit board, i.e. the wire. In a preferred embodiment the mass has differently developed colour properties which are guaranteed by applying at least two coatings. The colour and/or material property of the coating around the circuit board can for example be different from the colour and/or material property of the coating above or/and directly at the light source. The same is true for differences regarding the transparency of the coating. The cast mass can be deformed in a way that it allows an optimum adaptation to the blind geometry.

In another embodiment a mechanical protection by a cover cap and/or a combination of mechanic protection and coating is possible.

The invention basically provides a device and a method having at least one blind device, i.e. sun protection hangings for light and/or medial playing of sun protection arrangements.

The method provides in particular that the image and/or the light effects are not only created by controlling the separate light sources but are at the same time adjusted with the light protection function of the arrangement.

For example, several light protection hangings according to the present invention arranged next to each other and below each other form a matrix. Said matrix is different depending on building front and building geometry. Different directions as well as different times of the day and year, differently occupied rooms behind the building front form a constantly changing position of the sun protection hangings. The method according to the present invention is provided to adjust and adapt the position of the separate blind devices inside of the hangings with the separately controllable light sources. For example completely driven down blind hangings result in a greater plane that is appropriate for animation or colour change. Hangings that are driven up with gathered blinds that are arranged closely next to each other form a smaller plane which has a greater pixel frequency and is appropriate for transmission of text or separate letters and can thus take over a display function. Simultaneously, one has to pay attention to the quality and kind of the information transmitted via the controllable light sources and to the sensible positioning of the blind hangings so that correspondingly sufficient sun protection for the people sitting behind is guaranteed.

A plurality of hangings according to the present invention arranged next to each other or below each other result in a further design flexibility. The interconnected hangings serve as media plane. Greater arrangements can also result in planes on which videos can be displayed.

## Claims

1. A blind device (1, 12) for controllable sunlight protection, wherein the blind device (1, 12) further is for displaying of information, said device comprises:
a plurality of slats (3) each being movably attached to said blind device,
a plurality of light sources (9) being attached to said plurality of slats (3), said light sources (9) being for fulfilment of a display function and being arranged on a plurality of light source carriers (10), each light source carrier (10) being attached to at least one of the plurality of slats (3), wherein each light source carrier (10) is designed as a component that is adapted to be connected to a corresponding slat (3),
a guide cord (17) being adapted to hold said slats (3) in the blind device (1,12)
a lifting strip (4) being adapted to elevate said slats (3) within said blind device (1,12) and
a wire (5) comprising one or more cables for providing electrical connection,
wherein the display function is present even when the slats (3) are driven up and closely stacked and ruffled next to each other.

2. The blind device (1, 12) according to claim 1, wherein said guide cord (17) is adapted to rotate said slats (3).

3. The blind device (1, 12) according to one of the preceding claims, wherein said wire (5) is guided through said slats (3) and is integrated or bundled with the lifting strip (4).

4. The blind device (1, 12) according to one of the preceding claims, wherein said wire (5) is integrated or bundled with the guide cord (17).

5. The blind device according to one of the preceding claims, wherein said wire (5) is designed so that it serves as guide cord (17) and replaces its function.

6. The blind device (1, 12) according to one of the preceding claims, wherein said wire (5) is connected to a corresponding light source carrier (10) via at least one removable connection.

7. The blind device (1, 12) according to one of the preceding claims, wherein said wire (5) extends from an end of said slats (3) into a frame surrounding the blind device.

8. The blind device (1, 12) according to one of the preceding claims, wherein the wire (5) is formed as a sliding contact.

9. The blind device (1, 12) according to one of the preceding claims, wherein said wire (5) is arranged to facilitate the linear and the rotational movement of said slats (3) and/or to follow the stacking and ruffling of the guide cord (17), preferably
wherein said wire (5) is made of flexible materials and allows a gatherable deformation in its geometry.

10. The blind device (1, 12) according to one of the preceding claims, wherein several wires (5) are used and wherein said wires (5) are separated according to data/signals and/or electric current and are arranged at several positions that are sensible for the assembly of the light protection arrangement.

11. The blind device (1, 12) according to one of the preceding claims,
wherein the linear and the rotatable movements of said slats are driven by an electrical driving means, and/or
wherein the device comprises a slat control unit that is configured for transmitting a control signal, wherein said slat control unit is adapted to determine the position of said slats.

12. The blind device (1, 12) according to one of the preceding claims, wherein each light source carrier (10) comprises a first circuit board and at least one casing for protection of a corresponding light source and/or a corresponding first circuit board.

13. The blind device (1, 12) according claim 12, wherein each light source carrier (10) further comprises a second circuit board that is attached to a corresponding first circuit board and designed primarily to transform the electrical current and/or to transmit the signals via said wire into the light sources (9), more preferably wherein the first and second circuit board are configured modularly so that a blind device can be flexible in its length and width.

14. The blind device (1, 12) according to claim 13, wherein the circuit boards and the corresponding control and electronic units are designed so that they have a sheathing layer being weatherproof that can be applied on the basis of spray coat method, grouting, lacquering, brushing or another kind of permanent lamination.

15. The blind device (1, 12) according to one of the preceding claims, wherein the connection between said light source carriers (10) and the wire (5) is protected against impacts from outside by a protection hose, a shrink hose, an adhesive shrink hose and/or a covering film and/or a grouting coating.

16. The blind device (1, 12) according to one of the preceding claims,
wherein said slats (3) or at least the light sources (9) have a coating, a lamination, a pattern, and/or a grouting to improve its optical and/or technical characteristics, and
wherein said blind device (1, 12) preferably consists of a combination of materials having different technical characteristics in order to influence the light in the area of the light sources (9) in the desired way, in particular to display, deflect and/or absorb the light.

17. The blind device (1, 12) according to one of the preceding claims, wherein the blind device is arranged to be free-standing, wherein the blind device preferably comprises a photovoltaic element arranged as a layer on the top of said slats (3).

18. Assembly comprising at least one blind device (1, 12) according to one of the preceding claims, wherein said blind device (1, 12) is integrated in sun protection arrangements or Venetian blind arrangements.

19. Assembly according to claim 18,
wherein said assembly has a plurality of blind devices (1, 12) arranged on top of each other and/or next to each other, wherein said blind devices (1, 12) can be switched on independently from each other or in groups.

20. Assembly according to claim 18 or 19,
wherein said light sources (9) of said at least one blind device (1,12) form a plane that can be used for illumination or as an information carrier for animations and/or images, videos, and/or text banners.

21. Method provided for controllable light protection and/or displaying of information by using at least one blind device (1, 12) according to claims 1 to 17, wherein the method comprises the steps of:
a) arranging a plurality of light sources (9) at least on one light source carrier (10) and attaching the light source carrier (10) to the plurality of slats (3);
b) forming at least one display panel comprised of said plurality of light sources (9), and supplying electrical current to said light source (9) and sending a signal containing said information to a display control unit via said wire (5) or via wireless connection;
c) processing said electrical signal by said display control unit and controlling said plurality of light sources (9) individually or in groups to illuminate and output the information visually on said display panel.

22. Method according to claim 21, wherein the method further comprises the steps of:
changing the distance between each of said plurality of slats (3) by linearly moving said plurality of slats (3) close to each other when displaying information requiring information with higher resolution, such as a text passage, or changing the distance between each of said plurality of slats (3) by linearly moving said plurality of slats (3) apart from each other when displaying a larger image requiring smaller resolution, such as images or animation of images.

## Patentansprüche

1. Jalousievorrichtung (1, 12) zum regulierbaren Sonnenschutz, wobei die Jalousievorrichtung (1, 12) ferner zur Anzeige von Informationen ausgelegt ist, und die Vorrichtung umfasst:
mehrere Lamellen (3), die jeweils beweglich an der Jalousievorrichtung angebracht sind,
mehrere Lichtquellen (9), die an den mehreren Lamellen (3) angebracht sind, wobei die Lichtquellen (9) zur Erfüllung einer Anzeigefunktion vorgesehen und auf mehreren
Lichtquellenträgern (10) angeordnet sind, wobei jeder Lichtquellenträger (10) an mindestens einer der mehreren Lamellen (3) angebracht ist, wobei jeder
Lichtquellenträger (10) als ein Bauteil gestaltet ist, das zur Verbindung mit einer entsprechenden Lamelle (3) ausgebildet ist,
eine Führungsleine (17), die dazu ausgebildet ist, die Lamellen (3) in der Jalousievorrichtung (1, 12) zu halten,
ein Hebeband (4), das dazu ausgebildet ist, die Lamellen (3) innerhalb der Jalousievorrichtung (1, 12) anzuheben, und
eine Leitung (5), die ein oder mehr Kabel zur Bereitstellung der elektrischen Verbindung umfasst,
wobei die Anzeigefunktion sogar dann gewährleistet ist, wenn die Lamellen (3) nach oben gefahren und eng nebeneinander gestapelt und gerafft werden.

2. Jalousievorrichtung (1, 12) nach Anspruch 1, wobei die Führungsleine (17) zur Rotation der Lamellen (3) ausgebildet ist.

3. Jalousievorrichtung (1, 12) nach einem der vorhergehenden Ansprüche, wobei die Leitung (5) durch die Lamellen (3) geführt wird und im Hebeband (4) integriert oder damit gebündelt ist.

4. Jalousievorrichtung (1, 12) nach einem der vorhergehenden Ansprüche, wobei die Leitung (5) in der Führungsleine (17) integriert oder damit gebündelt ist.

5. Jalousievorrichtung nach einem der vorhergehenden Ansprüche, wobei die Leitung (5) derart ausgebildet ist, dass sie als Führungsleine (17) dient und ihre Funktion übernimmt.

6. Jalousievorrichtung (1, 12) nach einem der vorhergehenden Ansprüche, wobei die Leitung (5) mit einem entsprechenden Lichtquellenträger (10) über wenigstens eine lösbare Verbindung verbunden ist.

7. Jalousievorrichtung (1, 12) nach einem der vorhergehenden Ansprüche, wobei sich die Leitung (5) von einem Ende der Lamellen (3) in einen die Jalousievorrichtung umgebenden Rahmen erstreckt.

8. Jalousievorrichtung (1, 12) nach einem der vorhergehenden Ansprüche, wobei die Leitung (5) als ein Schleifkontakt ausgebildet ist.

9. Jalousievorrichtung (1, 12) nach einem der vorhergehenden Ansprüche, wobei die Leitung (5) so angebracht ist, dass sie die Linear- und Rotationsbewegung der Lamellen (3) vereinfacht und/oder dem Stapeln und Raffen der Führungskordel (17) folgt, wobei die Leitung (5) vorzugsweise aus flexiblen Materialien besteht und eine raffbare Deformation ihrer Geometrie erlaubt.

10. Jalousievorrichtung (1, 12) nach einem der vorhergehenden Ansprüche, wobei mehrere Leitungen (5) verwendet werden und wobei die Leitungen (5) nach Daten/Signalen und/oder Strom getrennt sind und an verschiedenen Positionen angeordnet sind, die für den Zusammenbau der Lichtschutzanordnung sinnvoll sind.

11. Jalousievorrichtung (1, 12) nach einem der vorhergehenden Ansprüche, wobei die Linear- und Rotationsbewegung der Lamellen von einer elektrischen Antriebseinrichtung betrieben wird, und/oder wobei die Vorrichtung eine Lamellensteuereinrichtung umfasst, die dazu ausgebildet ist, ein Steuersignal zu übertragen, wobei die Lamellensteuereinrichtung zur Bestimmung der Position der Lamellen ausgebildet ist.

12. Jalousievorrichtung (1, 12) nach einem der vorhergehenden Ansprüche, wobei jeder Lichtquellenträger (10) eine erste Platine und mindestens ein Gehäuse zum Schutz einer entsprechenden Lichtquelle und/oder einer entsprechenden ersten Platine umfasst.

13. Jalousievorrichtung (1, 12) nach Anspruch 12, wobei jeder Lichtquellenträger (10) ferner eine zweite Platine umfasst, die an eine entsprechende erste Platine angebracht ist, und vornehmlich dazu ausgebildet ist, den Strom umzuwandeln und/oder die Signale durch die Leitung in die Lichtquellen (9) zu leiten, wobei besonders bevorzugt die erste und zweite Platine modular gestaltet sind, so dass die Länge und Breite der Jalousievorrichtung flexibel sein kann.

14. Jalousievorrichtung (1, 12) nach Anspruch 13, wobei die Platinen und die entsprechenden Steuer- und Elektronikeinheiten so ausgebildet sind, dass sie eine witterungsbeständige Ummantelungsschicht aufweisen, die mittels Sprühbeschichten, Versiegeln, Lackieren, Bürsten oder einer anderen permanenten Beschichtungsart aufgebracht wird.

15. Jalousievorrichtung (1, 12) nach einem der vorhergehenden Ansprüche, wobei die Verbindung zwischen den Lichtquellenträgern (10) und der Leitung (5) gegen Einflüsse von außen durch einen Schutzschlauch, einen Schrumpfschlauch, einen haftenden Schrumpfschlauch und/oder eine Beschichtungsfolie und/oder eine Versiegelungsbeschichtung geschützt wird.

16. Jalousievorrichtung (1, 12) nach einem der vorhergehenden Ansprüche, wobei die Lamellen (3) oder mindestens die Lichtquellen (9) eine Beschichtung, eine Laminierung, ein Muster und/oder eine Versiegelung aufweisen, um ihre optischen und/oder technischen Eigenschaften zu verbessern, und wobei die Jalousievorrichtung (1, 12) vorzugsweise aus einer Kombination von Materialien besteht, die unterschiedliche technische Eigenschaften aufweisen, um das Licht im Bereich der Lichtquellen (9) in gewünschter Form zu beeinflussen, insbesondere um das Licht wiederzugeben, abzulenken und/oder zu absorbieren.

17. Jalousievorrichtung (1, 12) nach einem der vorhergehenden Ansprüche, wobei die Jalousievorrichtung freistehend angeordnet ist, und wobei die Jalousievorrichtung vorzugsweise ein photovoltaisches Element umfasst, das als eine Schicht auf den Lamellen (3) angeordnet ist.

18. Anordnung, umfassend mindestens eine Jalousievorrichtung (1, 12) nach einem der vorhergehenden Ansprüche, wobei die Jalousievorrichtung (1, 12) in Sonnenschutzanlagen oder Jalousieanlagen integriert ist.

19. Anordnung nach Anspruch 18, wobei die Anordnung mehrere übereinander und/oder nebeneinander angeordnete Jalousievorrichtungen (1, 12) aufweist, wobei die Jalousievorrichtungen (1, 12) unabhängig voneinander oder in Gruppen eingeschaltet werden können.

20. Anordnung nach Anspruch 18 oder 19, wobei die Lichtquellen (9) der mindestens einen Jalousievorrichtung (1, 12) eine Fläche bilden, die als Beleuchtung oder Informationsträger für Animationen und/oder Bilder, Videos und/oder Textbanner verwendet werden kann.

21. Verfahren für einen regulierbaren Lichtschutz und/oder zur Informationsanzeige unter Verwendung mindestens einer Jalousievorrichtung (1, 12) nach den Ansprüchen 1 bis 17, wobei das Verfahren die folgenden Schritte aufweist:
(a) Anordnen mehrerer Lichtquellen (9) auf mindestens einem Lichtquellenträger (10) und Anbringen des Lichtquellenträgers (10) an den mehreren Lamellen (3);
(b) Bilden mindestens einer Anzeigefläche, die die mehreren Lichtquellen (9) umfasst, und Versorgung der Lichtquelle (9) mit Strom und Senden eines Signals mit dieser Information zu einer Anzeigesteuereinheit über den Draht (5) oder drahtlos;
(c) Verarbeiten des elektrischen Signals durch die Anzeigesteuereinheit und Steuern der mehreren Lichtquellen (9) einzeln oder in Gruppen, um zu leuchten und die Information visuell auf der Anzeigefläche auszugeben.

22. Verfahren nach Anspruch 21, wobei das Verfahren des Weiteren die Schritte aufweist:
Ändern des Abstands zwischen jeder der mehreren Lamellen (3) durch lineares Zueinanderbewegen der mehreren Lamellen (3) bei der Anzeige von Informationen, die eine höhere Auflösung erfordern, wie zum Beispiel eine Textstelle, oder Ändern des Abstands zwischen jeder der mehreren Lamellen (3) durch lineares Auseinanderbewegen der mehreren Lamellen (3) bei der Anzeige eines größeren Bildes, das eine kleinere Auflösung erfordert, wie zum Beispiel Bilder oder Bildanimation.

## Revendications

1. Store (1, 12) pour une protection réglable contre la lumière solaire, ledit store (1, 12) étant en outre prévu pour l'affichage d'informations, ledit store comprenant :
une pluralité de lames (3) fixées chacune de manière à être mobile sur le store,
une pluralité de sources lumineuses (9) fixées à la pluralité de lames (3), lesdites sources lumineuses (9) étant prévues pour remplir une fonction d'affichage et étant disposées sur une pluralité de supports (10) de source lumineuse, chaque support (10) de source lumineuse étant fixé à au moins une lame de la pluralité de lames (3), chaque support (10) de source lumineuse étant conçu comme composant apte à être raccordé à une lame (3) correspondante,
une cordelette de guidage (17) prévue pour maintenir les lames (3) dans le store (1, 12),
une bandelette de soulèvement (4) prévue pour relever les lames (3) à l'intérieur du store (1, 12), et
un fil métallique (5) constitué d'un ou de plusieurs câbles pour réaliser une connexion électrique,
la fonction d'affichage étant présentée même quand les lames (3) sont remontées, rapprochées et serrées les unes contre les autres.

2. Store (1, 12) selon la revendication 1, où la cordelette de guidage (17) est prévue pour faire tourner les lames (3).

3. Store (1, 12) selon l'une des revendications précédentes, où le fil métallique (5) traverse les lames (3) et est intégré ou associé à la bandelette de soulèvement (4).

4. Store (1, 12) selon l'une des revendications précédentes, où le fil métallique (5) est intégré ou associé à la cordelette de guidage (17).

5. Store selon l'une des revendications précédentes, où le fil métallique (5) est conçu pour servir de cordelette de guidage (17) et se substituer à celle-ci.

6. Store (1, 12) selon l'une des revendications précédentes, où le fil métallique (5) est raccordé à un support (10) de source lumineuse correspondant par au moins une connexion amovible.

7. Store (1, 12) selon l'une des revendications précédentes, où le fil métallique (5) s'étend d'une extrémité des lames (3) à un cadre entourant le store.

8. Store (1, 12) selon l'une des revendications précédentes, où le fil métallique (5) est réalisé comme contact de frottement.

9. Store (1, 12) selon l'une des revendications précédentes, où le fil métallique (5) est conçu et disposé pour faciliter le mouvement linéaire et rotatif des lames (3) et/ou pour suivre le rapprochement et le resserrement de la cordelette de guidage (17),
le fil métallique (5) étant préférentiellement réalisé en matériaux flexibles et permettant une déformation par resserrement de sa géométrie.

10. Store (1, 12) selon l'une des revendications précédentes, où plusieurs fils métalliques (5) sont utilisés, où lesdits fils métalliques (5) sont séparés en fonction de signaux de données et/ou de courants électriques, et sont disposés à plusieurs emplacements sensibles pour le montage du dispositif de protection contre la lumière.

11. Store (1, 12) selon l'une des revendications précédentes,
où le mouvement linéaire et le mouvement rotatif des lames sont entraînés par un moyen d'entraînement électrique, et/ou
où le store comprend une unité de réglage des lames prévue pour transmettre un signal de commande, ladite unité de réglage des lames étant prévue pour déterminer la position des lames.

12. Store (1, 12) selon l'une des revendications précédentes, où chaque support (10) de source lumineuse comporte une première carte de circuits imprimés et au moins un boîtier pour protéger une source lumineuse correspondante et/ou une première carte de circuits imprimés correspondante.

13. Store (1, 12) selon la revendication 12, où chaque support (10) de source lumineuse comporte en outre une deuxième carte de circuits imprimés fixée à une première carte de circuits imprimés correspondante et prévue en premier lieu pour transformer le courant électrique et/ou pour transmettre les signaux aux sources lumineuses (9) par l'intermédiaire du fil métallique, la première et la deuxième cartes de circuits imprimés étant plus préférentiellement configurées de manière modulaire pour permettre une flexibilité en longueur et en largeur du store.

14. Store (1, 12) selon la revendication 13, où les cartes de circuits imprimés et les unités de réglage et électroniques correspondantes sont conçues de manière à présenter une couche de revêtement résistante aux intempéries pouvant être appliquée par technique de revêtement par pulvérisation, de scellement, de vernissage, de brossage ou par toute autre technique de lamination permanente.

15. Store (1, 12) selon l'une des revendications précédentes, où la connexion entre les supports (10) de source lumineuse et le fil métallique (5) est protégée contre des chocs extérieurs par une gaine de protection, une gaine rétractable, une gaine rétractable adhésive et/ou un film de couverture et/ou par un revêtement de scellement.

16. Store (1, 12) selon l'une des revendications précédentes,
où les lames (3) ou au moins les sources lumineuses (9) présentent un revêtement, une lamination, un motif, et/ou un scellement pour améliorer leurs propriétés optiques et/ou techniques, et
où le store (1, 12) consiste préférentiellement en une combinaison de matériaux présentant des propriétés techniques différentes afin d'influencer d'une manière souhaitée la lumière dans la zone des sources lumineuses (9), en particulier pour projeter, dévier et/ou absorber la lumière.

17. Store (1, 12) selon l'une des revendications précédentes, où ledit store est prévu pour être indépendant, ledit store comportant préférentiellement un élément photovoltaïque prévu comme couche sur les lames (3).

18. Montage comprenant au moins un store (1, 12) selon l'une des revendications précédentes, où ledit store (1, 12) est intégré à des dispositifs de protection solaire ou des dispositifs à store vénitien.

19. Montage selon la revendication 18,
où ledit montage comprend une pluralité de stores (1, 12) disposés les uns sur les autres et/ou l'un à côté de l'autre, lesdits stores (1, 12) pouvant être commutés indépendamment les uns des autres ou par groupes.

20. Montage selon la revendication 18 ou la revendication 19,
où les sources lumineuses (9) d'au moins un store (1, 12) forment un plan pouvant être utilisé pour l'éclairage ou comme support d'information pour des animations et/ou des images, des vidéos, et/ou des bannières de texte.

21. Procédé de protection réglable contre la lumière, et/ou d'affichage d'informations, recourant à au moins un store (1, 12) selon les revendications 1 à 17, ledit procédé comprenant les étapes suivantes :
a) disposition d'une pluralité de sources lumineuses (9) sur au moins un support (10) de source lumineuse et fixation du support (10) de source lumineuse sur la pluralité de lames (3) ;
b) formation d'au moins un panneau d'affichage constitué de la pluralité de sources lumineuses (9), alimentation en courant desdites sources lumineuses (9), et émission d'un signal contenant les informations vers une unité de commande d'affichage par l'intermédiaire du fil métallique (5) ou par liaison sans fil ;
c) traitement du signal électrique par l'unité de commande d'affichage et réglage individuel ou par groupes de la pluralité de sources lumineuses (9) pour éclairage et visualisation des informations sur le panneau d'affichage.

22. Procédé selon la revendication 21, ledit procédé comprenant en outre les étapes suivantes :
variation d'espacement entre les lames de la pluralité de lames (3) par déplacement linéaire de ladite pluralité de lames (3) pour rapprocher celles-ci l'une de l'autre afin d'afficher des informations avec une résolution supérieure, telles qu'un passage de texte, ou variation d'espacement entre les lames de la pluralité de lames (3) par déplacement linéaire de ladite pluralité de lames (3) pour écarter celles-ci l'une de l'autre afin d'afficher une image plus grande avec une résolution inférieure, telle que des images ou des animations d'images.
